# EUROPÄISCHE PATENTANMELDUNG

(11) **EP 2 359 955 A2**
(43) Veröffentlichungstag der Anmeldung: **24.08.2011**
(21) Anmeldenummer: 10197214.9
(22) Anmeldetag: 28.12.2010
(51) Int. Cl.: B21F 11/00, B21J 15/02, B21J 15/08, B29C 65/60

(54) **Thermoplast-Nietverfahren für faserverstärkte Kunststoffbauteile**

(30) Priorität: 29.12.2009 DE 102009060691
(71) Anmelder: Paspirgilis, Bernd Ewald, 24972 Steinbergkirche (DE); Eilken, Wolfgang, 22547 Hamburg (DE)
(72) Erfinder: Paspirgilis, Bernd Ewald, 24972 Steinbergkirche (DE); Eilken, Wolfgang, 22547 Hamburg (DE)

(57) **Zusammenfassung**

Offenbart ist ein Nietverfahren zum Setzen eines Niets (2) in eine Nietbohrung (10) zumindest eines Fügepartners (12), gemäß der ein Stangenmaterial in die Nietbohrung (10) zugeführt und zugeschnitten wird, wobei Umformabschnitte des Stangenmaterials (2) anschließend erwärmt und unter Ausbildung eines Setzkopfes (6) und eines Schließkopfes (8) umgeformt werden. Weiterhin offenbar ist ein Niet (2) mit einem Nietkörper zur Ausbildung eines Nietschafts, eines Setzkopfes (6) und eines Schließkopfes (8) beim Setzen des Niets (2), wobei der Nietkörper aus einem Stangenmaterial ausgebildet ist, das in eine Nietbohrung (10) zuführ- und zuschneidbar ist, wobei das Stangenmaterial beim Setzen des Niets (2) zu dem Nietschaft (4), Setzkopf (6) und Schließkopf (8) umformbar ist.

## Beschreibung

Die Erfindung betrifft ein Nietverfahren zum Setzen eines Niets gemäß dem Oberbegriff des Patentanspruchs 1 sowie einen Niet nach dem Oberbegriff des Patentanspruchs 11.

Nieten werden beispielsweise in den heutigen Serienflugzeugen über Manuelles- und Automaten-Nieten in großen Stückzahlen eingesetzt. Derzeit ist es üblich, eine Vielzahl von einteiligen oder zweiteiligen Verbindungselementen, beispielsweise Voll- oder Blindniete bzw. Hi-Lites oder Lockbolts, aus korrosionsfreien Metalllegierungen für die Vernietung von Bauteilen aus Kohlenstofffaserverstärktem-Kunststoff, sogenannten CFRP (Carbon fiber reinforced plastic)-Bauteilen, zu verwenden. Nachteilig bei derartigen Verbindungselementen aus korrosionsfreien Metalllegierungen ist neben den hohen Herstellungskosten das hohe Gewicht.

Zur Kosten- und Gewichtsreduzierung ist aus der WO 2005/058525 A2 ein Verfahren zur Herstellung einer Nietverbindung bekannt, gemäß dem ein vorgeformter Vollniet aus faserverstärktem Thermoplast verwendet wird. Das Stauchen des Nietschafts zum Setzen des Niets erfolgt mittels eines beheizten oder unbeheizten Formkopfes. Nachteilig bei einem derartigen Nietverfahren zum Setzen eines Niets ist, dass Niete mit unterschiedlichen Schaftlängen erforderlich sind, um Fügepartner mit verschiedenen Klemmlängen verbinden zu können. Dadurch ist dieses Nietverfahren fertigungs- und montagetechnisch aufwendig und kostenintensiv.

Demgegenüber liegt der Erfindung die Aufgabe zugrunde, ein Nietverfahren zum Setzen eines Niets sowie einen Niet zu schaffen, bei denen ein Fügen mit minimalem fertigungs- und montagetechnischem Aufwand ermöglicht ist.

Diese Aufgabe wird durch ein Nietverfahren zum Setzen eines Niets mit den Merkmalen des Patentanspruchs 1 und durch einen Niet gemäß Patentanspruch 11 gelöst.

Das erfindungsgemäße Nietverfahren zum Setzen eines Niets in eine Nietbohrung zumindest eines Fügepartners, insbesondere von faserverstärkten Bauteilen als auch sonstigen Bauteilen des Flugzeugbaus, umfasst die folgenden Schritte:
a) Zuführen eines Stangenmaterials in die Nietbohrung;
b) Zuschneiden des Stangenmaterials und
c) Erwärmen von Umformabschnitten des Stangenmaterials und Ausbilden eines Setzkopfes und eines Schließkopfes.

Erfindungsgemäß wird ein Stangenmaterial in die Nietbohrung eingeführt und durchsetzt diese. Nach dem Zuführen wird das Stangenmaterial zugeschnitten, die Umformabschnitte erwärmt und Setzkopf sowie Schließkopf ausgebildet. Der Niet kann beispielsweise als Universalniet mit Pilz- bzw. Rundkopf oder als Senkniet ausgebildet werden. Das Stangenmaterial hat vorzugsweise einen kreisförmigen Querschnitt.

Aufgrund der Verwendung von nach dem Einführen in die Nietbohrung abgelängtem Stangenmaterial sind gegenüber dem Stand der Technik keine unterschiedlichen Schaftlängen erforderlich, um Fügepartner mit unterschiedlichen Klemmlängen, insbesondere im Flugzeugbau, verbinden zu können. Die Anwendung von Stangenmaterial lässt die Vielzahl von unterschiedlichen Verbindungselementen aufgrund der Klemmlänge entfallen. Dadurch ist das Nietverfahren fertigungs- und montagetechnisch einfach, flexibel und kostengünstig durchführbar. Die Bohrungstoleranzen können wegen dem duktileren Warmformungsverhalten des Nietes größer gewählt werden. Ferner kann die Länge des vom Stangenmaterial abgeschnittenen Verbindungselementes für Setz- und Schließkopf individuell optimiert werden. Damit kann der Einsatz von teureren und schwereren Verbindungselementen auf die Bereiche reduziert werden, wo es strukturmechanisch erforderlich ist, bzw. wo es die Nietzugänglichkeit erforderlich macht.

Gemäß einem besonders bevorzugten Ausführungsbeispiel der Erfindung wird das Stangenmaterial in Schritt a) derart zugeführt und in Schritt b) zugeschnitten, dass dieses die Nietbohrung durchsetzt und beidseitig der Nietbohrung ein die Umformabschnitte ausbildender Überstand ausgebildet wird, der in Schritt c) erwärmt und auf der einen Seite der Nietbohrung zu einem Setzkopf und auf der anderen Seite zu einem Schließkopf umgeformt wird.

Erfindungsgemäß wird als Stangenmaterial vorzugsweise zumindest ein Thermoplast oder eine Thermoplastmischung verwendet. Als besonders vorteilhaft hat es sich hierbei erwiesen, wenn der Thermoplast oder die Thermoplastmischung mit Fasern und/oder Gewebe, vorzugsweise Kohlenstoff-, Glas-, Aramid- und/oder Borfasern, verstärkt ist. Die Fasern können beispielsweise unidirektional entlang der Längsrichtung des Stangenmaterials ausgerichtet sein, so dass eine hohe Zugfestigkeit des Niets erreicht wird. Beim Fügen von CFRP-Bauteile, insbesondere auch von CFRP-Thermoplast-Bauteilen, kann Korrosion mittels einer gleichen Werkstoffpaarung verhindert werden. Vorzugsweise wird ein CFKverstärkter Thermoplastniet zum Fügen von CFK-CFRP-Thermoplast-Bauteilen verwendet.

Das Stangenmaterial wird in Schritt b) vorzugsweise beidseitig der Fügepartner zugeschnitten, so dass die Umformabschnitte ausgebildet werden. Das Zuschneiden des Stangenmaterials erfolgt insbesondere in Abhängigkeit der Klemmlänge der Fügepartner. Erfindungsgemäß sind Reparaturen an Primär- und Sekundär-CFRP-Strukturen möglich, ohne dass Reparaturniete mit größerem Nietdurchmesser angewandt werden müssen. Hierzu wird die Nietlänge entsprechend angepasst. Dies kann in Teilbereichen zu kleineren und leichteren Bauteilen führen. Dadurch ist die Kundenakzeptanz aufgrund der besseren Reparaturfähigkeit erhöht. Ferner ist eine Verschmelzung eventuell aufgebrochener Faser-Harz-Laminate im Bohrungsbereich möglich.

Der Wärmeeintrag zum Umformen der Umformabschnitte wird vorzugsweise mittels zumindest eines Heizelements, Ultraschall und/oder durch die Verformungsenergie selbst erreicht.

Bei einem bevorzugten Ausführungsbeispiel erfolgt das Erwärmen der Umformabschnitte des Stangenmaterials in Schritt c) mittels Ultraschall, insbesondere mittels einer Sonotrode. Dadurch wird eine gezielte, schnelle Erwärmung der Umformabschnitte erreicht, so dass die Montagezeit verringert ist.

Alternativ oder zusätzlich kann das Erwärmen der Umformabschnitte des Stangenmaterials in Schritt c) mittels zumindest eines Heizelements erfolgen.

Die Fügepartner werden vorzugsweise, insbesondere während dem Umformen, im Nietbereich mittels Niederhalter in Anlage gebracht. Dadurch wird eine Aufspreizung der Fügepartner während dem Nieten verhindert und eine hochfeste Verbindung erreicht.

Erfindungsgemäß kann der Niederhalter beidseitig der Fügepartner jeweils eine Anpresshülse aufweisen, die jeweils einen Döpper zur Umformung des Stangenmaterials umgreifen. Den Döppern kann ein Heizelement und/oder eine Sonotrode zugeordnet sein, um neben der Verformungsenergie einen Wärmeeintrag in den Umformabschnitt zu erreichen.

Der Durchmesser der Anpresshülsen kann entsprechend dem auszubildenden Durchmesser des Setzkopfes und Schließkopfes ausgebildet sein. Die Anpresshülsen weisen bei einem erfindungsgemäßen Ausführungsbeispiel unterschiedliche Durchmesser auf. Beispielweise kann die Anpresshülse zur Ausbildung eines Senkniet-Setzkopfes einen gegenüber der Anpresshülse zur Ausbildung eines Schließkopfes größeren Durchmesser aufweisen. Die Döpperstirnflächen sind entsprechend den auszubildenden Kopfformen des Niets geformt. Der schließkopfseitige Döpper kann einen mittig angeordneten Vorsprung zur Einbringung einer kugelabschnittsförmigen Einprägung in den Schließkopf aufweisen.

Das erfindungsgemäße Nietverfahren ist von der manuellen Handnietung bis hin zur Automatennietung anwendbar. Bereits vorhandene Nietautomaten können verwendet werden, so dass ein Fertigungs-Mix aus zweiteiligen Passnieten wie z.B. Metallniete mit faserverstärkten Thermoplast-Nieten möglich ist.

Ein erfindungsgemäßer Niet hat einen Nietkörper zur Ausbildung eines Nietschafts, eines Setzkopfes und eines Schließkopfes beim Setzen des Niets. Erfindungsgemäß ist der Nietkörper aus einem Stangenmaterial ausgebildet, das in eine Nietbohrung zuführ- und anschließend zuschneidbar ist, wobei das Stangenmaterial beim Setzen des Niets zu dem Nietschaft, Setzkopf und Schließkopf umformbar ist.

Als besonders vorteilhaft hat es sich erwiesen, wenn das Stangenmaterial zumindest einen mit Fasern und/oder Gewebe, vorzugsweise Kohlenstoff-, Glas-, Aramid- und/oder Borfasern, verstärkten Thermoplast oder eine derartig verstärkte Thermoplastmischung aufweist.

Anwendungsbereich der Niete sind insbesondere alle nichtlösbaren Verbindungen von Primär- und Sekundär-Bauteilen im Flugzeugbau, wie beispielsweise Stringer-Hautverbindungen, Doppler-Hautverbindungen, Spant-Hautverbindungen, Spant-Clipverbindungen, Cleat-Spantverbindungen, Halter-Primärstrukturverbindungen, Halter-Halterverbindungen, Schalenmontagen über Längsnähte, Spantkupplungsmontagen, Sektionsmontagen über Quernähte und Stringerkupplungen, Rippen-Hautverbindungen, Fensterrahmen-Hautverbindungen, Fachwerkverbindungen in sich und zu den Anschluss-Bauteilen und grundsätzlich alle CFRP-Primärstrukturen des Rumpfes inkl. Fußboden, Flügel und Leitwerke. Ferner sind Hybridverbindungen von Bauteilen aus Ti/CFRP, Ti/Ti oder Ti/Cres möglich.

Sonstige vorteilhafte Weiterbildungen der Erfindung sind Bestandteil der weiteren Unteransprüche.

Im Folgenden wird ein bevorzugtes Ausführungsbeispiel der Erfindung anhand schematischer Zeichnungen näher erläutert. Es zeigen:
Figur 1 eine Schnittdarstellung einer erfindungsgemäß gesetzten Nietverbindung;
Figur 2 eine Schnittdarstellung der Fügepartner aus Figur 1 nach dem Bohren und Senken der Nietbohrung;
Figur 3 eine Schnittdarstellung der Fügepartner aus Figur 1 mit in die Nietbohrung eingeführtem Stangenmaterial vor dem Zuschnitt;
Figur 4 eine Schnittdarstellung der Nietverbindung während dem Umformen (Stauchen) des Stangenmaterials und
Figur 5 eine Schnittdarstellung der fertig gesetzten Nietverbindung mit Umformwerkzeug.

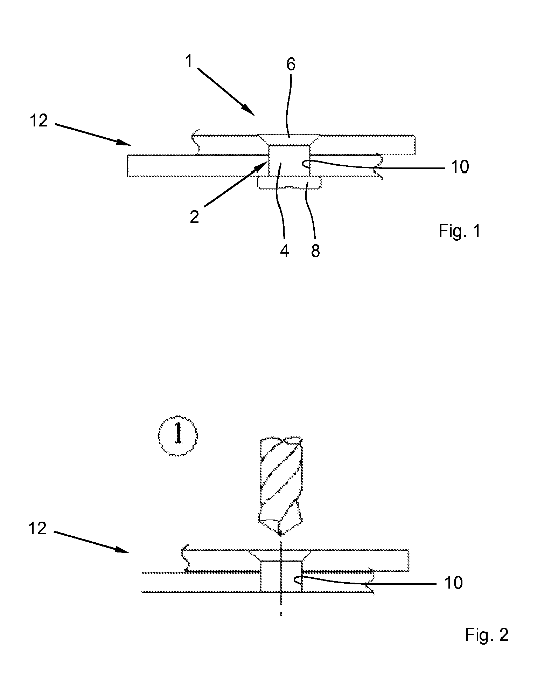

Figur 1 zeigt eine Schnittdarstellung einer erfindungsgemäß gesetzten, als Überlappverbindung im Flugzeugbau ausgeführten Nietverbindung mit einem als Senkniet ausgebildeten Niet 1. Der Niet 1 hat einen Nietkörper 2 mit einem Nietschaft 4, einem Setzkopf 6 und einem Schließkopfes 8, die beim Setzen des Niets ausgebildet werden. Der Nietkörper 2 ist aus einem Stangenmaterial ausgebildet, das in eine Nietbohrung 10 der Fügepartner 12 zugeführt und anschließend zugeschnitten wurde, wobei das Stangenmaterial 2 beim Setzen des Niets 1 zu dem Nietschaft 4, Setzkopf 6 und Schließkopf 8 umgeformt wurde.

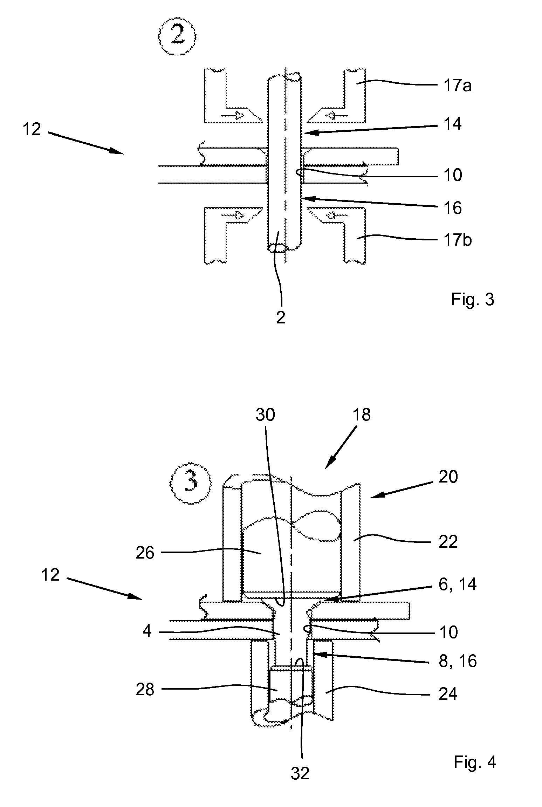

Das erfindungsgemäße Nietverfahren zum Setzen des Niets 1 in die Nietbohrung 10 der Fügepartner 12 umfasst die folgenden Schritte:
a) Zuführen des Stangenmaterials 2 in die Nietbohrung 10;
b) Zuschneiden des Stangenmaterials 2 und
c) Erwärmen von Umformabschnitten 14, 16 (siehe Figur 4) des Stangenmaterials 2 und Ausbilden des Setzkopfes 6 und des Schließkopfes 8.

Dies wird im Folgenden anhand der Figuren 2 bis 5 näher erläutert, die wesentliche Schritte des erfindungsgemäßen Nietverfahrens zeigen.

Wie Figur 2 zu entnehmen ist, die eine Schnittdarstellung der Fügepartner 12 aus Figur 1 nach dem Bohren und Senken der Nietbohrung 10 zeigt, wird die Nietbohrung 10 zunächst in die Fügepartner eingebracht.

Gemäß Figur 3 wird das Stangenmaterial 2 anschließend in die Nietbohrung 10 zugeführt. Bei dem dargestellten Ausführungsbeispiel wird als Stangenmaterial 2 ein mit Kohlenstofffasern verstärkter Thermoplast verwendet. Die Fasern erstrecken sich unidirektional entlang der Längsrichtung des Stangenmaterials 2, so dass eine hohe Zugfestigkeit des Niets erreicht wird. Das Stangenmaterial 2 hat einen kreisförmigen Querschnitt, wobei der Durchmesser des Stangenmaterials 2 geringfügig kleiner als der Durchmesser der Nietbohrung 10 ist.

Nach dem Zuführen des Stangenmaterials 2 in die Nietbohrung 10 wird dieses beidseitig der Fügepartner 12 derart zugeschnitten, dass beidseitig der Nietbohrung 10 ein die Umformabschnitte 14, 16 ausbildender Überstand ausgebildet wird. Das Zuschneiden erfolgt bei dem gezeigten Ausführungsbeispiel mittels paarweise angeordneten Schneidbacken 17a, 17b in Abhängigkeit der Klemmlänge der Fügepartner 12. Aufgrund der Verwendung von nach dem Einführen in die Nietbohrung 10 abgelängtem Stangenmaterial 2 sind keine unterschiedlichen Schaftlängen erforderlich, um Fügepartner 12 mit unterschiedlichen Klemmlängen verbinden zu können. Dadurch ist das Nietverfahren fertigungs- und montagetechnisch einfach, flexibel und kostengünstig durchführbar.

Wie Figur 4 zu entnehmen ist, die eine Schnittdarstellung der Nietverbindung während dem Umformen (Stauchen) des Strangmaterials 2 mittels einem Umformwerkzeug 18 zeigt, werden die Fügepartner 12 im Nietbereich mittels einem Niederhalter 20 in Anlage gebracht, so dass ein Aufspreizen der Fügepartner 12 während dem Nieten verhindert ist.

Der Niederhalter 20 weist beidseitig der Fügepartner 12 jeweils eine Anpresshülse 22, 24 auf, die jeweils einen Döpper 26, 28 zur Umformung des Stangenmaterials 2 umgreift.

Den Döppern 26, 28 ist ein nicht dargestelltes Heizelement zugeordnet, um neben der Verformungsenergie einen Wärmeeintrag in die Umformabschnitte 14, 16 zu erreichen.

Der Durchmesser der Anpresshülsen 22, 24 ist entsprechend dem auszubildenden Durchmesser des Setzkopfes 6 und Schließkopfes 8 ausgebildet. Die Anpresshülse 22 zur Ausbildung des Senkniet-Setzkopfes 6 hat einen gegenüber der Anpresshülse 24 zur Ausbildung des Schließkopfes 8 größeren Innendurchmesser. Die Döpperstirnflächen 30, 32 sind entsprechend den auszubildenden Kopfformen des Niets 1 geformt. Die auf Verformungstemperatur erwärmten Umformabschnitte 14, 16 werden mit dem Döpper 26 auf der einen Seite der Nietbohrung 10 zu dem Setzkopf 6 und auf der anderen Seite mit dem Döpper 28 zu dem Schließkopf 8 umgeformt. Der Nietschaft 4 wird ebenfalls gestaucht und an der Nietbohrung 10 in Anlage gebracht, so dass eine dichte Verbindung erreicht wird. Aufgrund des duktilen Verhaltens des CFK-Thermoplast-Niets 1 kann ggf. auf eine Dichtmasse im Nietbereich verzichtet werden.

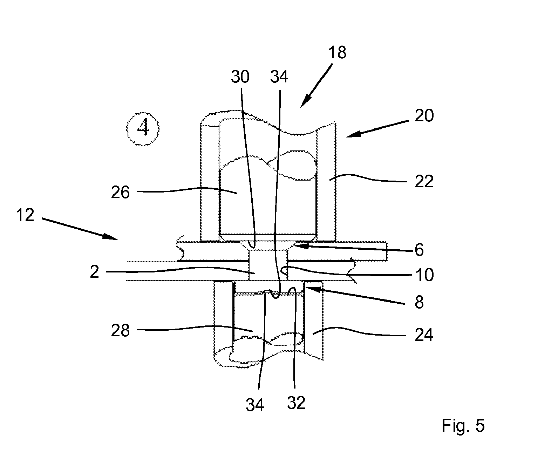

Figur 5 zeigt eine Schnittdarstellung der fertig gesetzten Nietverbindung mit Niet 1 und Umformwerkzeug 18. Der schließkopfseitige Döpper 28 weist einen mittig angeordneten Vorsprung 34 zur Einbringung einer kugelabschnittsförmigen Einprägung 36 in den Schließkopf 8 auf.

Offenbart ist ein Nietverfahren zum Setzen eines Niets 1 in eine Nietbohrung 10 zumindest eines Fügepartners 12, gemäß der ein Stangenmaterial 2 in die Nietbohrung 10 zugeführt und zugeschnitten wird, wobei Umformabschnitte 14, 16 des Stangenmaterials 2 anschließend erwärmt und unter Ausbildung eines Setzkopfes 6 und eines Schließkopfes 8 umgeformt werden.

Weiterhin offenbar ist ein Niet 1 mit einem Nietkörper 2 zur Ausbildung eines Nietschafts 4, eines Setzkopfes 6 und eines Schließkopfes 8 beim Setzen des Niets 1, wobei der Nietkörper 2 aus einem Stangenmaterial ausgebildet ist, das in eine Nietbohrung 10 zuführ- und zuschneidbar ist, wobei das Stangenmaterial 2 beim Setzen des Niets 1 zu dem Nietschaft 4, Setzkopf 6 und Schließkopf 8 umformbar ist.

### Bezugszeichenliste

- 1: Niet
- 2: Nietkörper
- 4: Nietschaft
- 6: Setzkopf
- 8: Schließkopf
- 10: Nietbohrung
- 12: Fügepartner
- 14: Umformabschnitt
- 16: Umformabschnitt
- 17: Schneidbacken
- 18: Umformwerkzeug
- 20: Niederhalter
- 22: Anpresshülse
- 24: Anpresshülse
- 26: Döpper
- 28: Döpper
- 30: Döpperstirnfläche
- 32: Döpperstirnfläche
- 34: Vorsprung
- 36: Einprägung

## Patentansprüche

1. Nietverfahren zum Setzen eines Niets (1) in eine Nietbohrung (10) zumindest eines Fügepartners (12), **gekennzeichnet durch** die Schritte:
a) Zuführen eines Stangenmaterials (2) in die Nietbohrung (10);
b) Zuschneiden des Stangenmaterials (2) und
c) Erwärmen von Umformabschnitten (14, 16) des Stangenmaterials (2) und Ausbilden eines Setzkopfes (6) und eines Schließkopfes (8).

2. Nietverfahren nach Anspruch 1, wobei das Stangenmaterial (2) in Schritt a) derart zugeführt und in Schritt b) zugeschnitten wird, dass dieses die Nietbohrung (10) durchsetzt und beidseitig der Nietbohrung (10) ein Umformabschnitt (14, 16) ausgebildet wird, der in Schritt c) erwärmt und auf der einen Seite der Nietbohrung (10) zu dem Setzkopf (6) und auf der anderen Seite zu dem Schließkopf (8) umgeformt wird.

3. Nietverfahren nach Anspruch 1 oder 2, wobei als Stangenmaterial (2) zumindest ein Thermoplast oder eine Thermoplastmischung verwendet wird.

4. Nietverfahren nach Anspruch 3, wobei ein mit Fasern und/oder Gewebe, vorzugsweise Kohlenstoff-, Glas-, Aramid-und/oder Borfasern, verstärkter Thermoplast oder eine mit Fasern und/oder Gewebe verstärkte Thermoplastmischung als Stangenmaterial (2) verwendet wird.

5. Nietverfahren nach einem der vorhergehenden Ansprüche, wobei das Stangenmaterial (2) in Schritt b) beidseitig der Fügepartner (12) zugeschnitten wird.

6. Nietverfahren nach einem der vorhergehenden Ansprüche, wobei das Stangenmaterial (2) in Schritt b) in Abhängigkeit der Klemmlänge der Fügepartner (12) zugeschnitten wird.

7. Nietverfahren nach einem der vorhergehenden Ansprüche, wobei das Erwärmen der Umformabschnitte (14, 16) des Stangenmaterials (2) in Schritt c) mittels Ultraschall, insbesondere mittels einer Sonotrode, erfolgt.

8. Nietverfahren nach einem der vorhergehenden Ansprüche, wobei das Erwärmen der Umformabschnitte (14, 16) des Stangenmaterials (2) in Schritt c) mittels zumindest einem Heizelement erfolgt.

9. Nietverfahren nach einem der vorhergehenden Ansprüche, wobei die Fügepartner (12), insbesondere während dem Umformen, im Nietbereich mittels Niederhalter (20) in Anlage gebracht sind.

10. Nietverfahren nach Anspruch 9, wobei der Niederhalter (20) beidseitig der Fügepartner (12) jeweils eine Anpresshülse (22, 24) aufweist, die jeweils einen Döpper (26, 28) zur Umformung des Stangenmaterials (2) umgreift.

11. Niet mit einem Nietkörper (2) zur Ausbildung eines Nietschafts (4), eines Setzkopfes (6) und eines Schließkopfes (8) beim Setzen des Niets (1), **dadurch gekennzeichnet, dass** der Nietkörper aus einem Stangenmaterial (2) ausgebildet ist, das in eine Nietbohrung (10) zuführ- und zuschneidbar ist, wobei das Stangenmaterial (10) beim Setzen des Niets (1) zu dem Nietschaft (4), Setzkopf (6) und Schließkopf (8) umformbar ist.

12. Niet nach Anspruch 11, wobei das Stangenmaterial (2) zumindest einen Thermoplast oder eine Thermoplastmischung aufweist.

13. Niet nach Anspruch 12, wobei der Thermoplast oder die Thermoplastmischung mit Fasern und/oder Gewebe, vorzugsweise Kohlenstoff-, Glas-, Aramid- und/oder Borfasern, verstärkt ist.
